# EUROPÄISCHE PATENTANMELDUNG

(11) **EP 2 270 452 A2**
(43) Veröffentlichungstag der Anmeldung: **05.01.2011**
(21) Anmeldenummer: 10006696.8
(22) Anmeldetag: 28.06.2010
(51) Int. Cl.: G01K 1/02

(54) **Vorrichtung zur Temparaturüberwachung in elektrischen Anlagen, elektrische Anlage mit einer derartigen Vorrichtung sowie Verfahren zum Betrieb derselben**

(30) Priorität: 29.06.2009 DE 202009008896 U
(71) Anmelder: KÖHL AG, 6868 Wecker (LU)
(72) Erfinder: Toth, Laszlo, 54296 Trier (DE)
(74) Vertreter: Grosse, Felix Christopher

(57) **Zusammenfassung**

Elektronische Vorrichtung zum Erfassen von Temperaturwerten an mindestens einem elektrischen Stromleiter oder an mindestens einer Stromverbindung in einer elektrischen Anlage, wobei die Vorrichtung mindestens einen RFID- Transponder, der an dem mindestens einen Stromleiter oder an der mindestens einen Stromverbindung angeordnet ist, mindestens einen in dem RFID-Transponder integrierbaren, mit dem RFID Transponder kombinierbaren oder mit dem RFID-Transponder koppelbaren Temperatursensor und mindestens eine RFID- Antenne aufweist, wobei der RFID- Transponder mittels der RFID- Antenne mit einem externen RFID- Reader zum Empfangen oder Auslesen der Daten aus dem RFID- Transponder und zum Bereitstellen eines an den gemessenen Temperaturwert gekoppelten Signals kabellos verbindbar ist und eine elektrische Anlage umfassend eine derartige elektronische Vorrichtung.

## Beschreibung

Die vorliegende Erfindung betrifft eine elektronische Vorrichtung zum Erfassen von Temperaturwerten an mindestens einem elektrischen Stromleiter oder an mindestens einer Stromverbindung in einer elektrischen Anlage mit deren Hilfe Wärmeprobleme an elektrischen Leitungen, insbesondere an Hauptstrombahnen, und deren Verbindungen frühzeitig erkannt werden können.Die größte Gefahr beim Betrieb einer elektrischen Anlage besteht darin, dass die elektrischen Leitungen, uns insbesondere die elektrischen Hauptstrombahnen, durch Überlast, durch falsche Installation und Alterungsprozesse, die elektrischen Stromverbindungen durch fehlerhaftes Anziehen, oder Nachlassen der Druckkraft der Druckelemente, oder durch schädliche externe Einwirkung sich übermäßig erwärmen. Durch die übermäßige Erwärmung entstehen Schäden an der Anlage selbst, die bis zur vollständigen Zerstörung der Anlage führen können. Schlimmstenfalls entstehen Verletzungen des Bedienerpersonals.

Aus diesem Grund müssen insbesondere alle elektrischen Hauptstromleiter und deren Verbindungen in den elektrischen Anlagen regelmäßig überprüft und instandgesetzt werden, ohne zu wissen, ob diese tatsächlich geschädigt sind oder überbeansprucht wurden. Die Überprüfung muss je nach Risiko, wie beispielsweise Beanspruchung oder Verfügbarkeitserwartung der Leitung oder der Verbindung, in regelmäßigen Intervallen durchgeführt werden, damit mögliche einen Schaden verursachende Fehler an diesen Leitungen und Verbindungen rechtzeitig entdeckt und beseitigt werden können. In der Regel muss die gesamte Anlage spannungsfrei geschaltet werden. Zudem müssen regelmäßig Verkleidungsteile entfernt werden um die Anschlüsse und Verbindungen zu erreichen. Diese Überprüfung und gegebenenfalls Instandsetzung ist zeitintensiv und die damit einhergehenden Stillstandszeiten kostspielig. In einigen Anwendungen sind derartige wartungsbedingte Stillstandzeiten sogar überhaupt nicht möglich.

Im Stand der Technik ist es bekannt mit Hilfe von Wärmebildkameraaufnahmen die übermäßige Erwärmung der Leitungen und Verbindungen bei laufendem Betrieb zu lokalisieren. Dies ist mit Gefahren für das Wartungs- und Bedienpersonal verbunden. Die modernen elektrischen Anlagen sind in der Regel so aufgebaut, dass die meisten elektrischen Leitungen und Hauptstromverbindungen im Betrieb für die Wärmebildkamera gar nicht sichtbar bzw. nicht zugänglich sind. Die Sammelschienen, in denen derartige Leitungen geführt sind, sind üblicherweise durch Schottbleche verdeckt. Einschübe und Einsätze können im Betrieb der elektrischen Anlage nicht geöffnet werden. Vor Anschlussklemmstellen sind Berührungsschutz-Abdeckungen angebracht. Die Kupfer und Aluminiumleiter, die üblicherweise mit durchsichtigen Abdeckungen gegenüber der Umwelt abgeschirmt sind, weisen spiegelnde Oberflächen auf, wodurch die Messergebnisse verfälscht. Um dennoch Wärmebildaufnahmen der Leitungen und Verbindungen machen zu können, müssen bei derart gekapselten elektrischen Anlagen die Türen, Seiten- und Rückwände geöffnet werden. Hierdurch sinkt die Innenraumtemperatur der elektrischen Anlage sehr stark ab, was ein nicht einkalkulierbaren Einfluss auf die Messung mit sich bringt. Aus diesen Gründen ist der Aussagekraft dieser Technik sehr engen Grenzen gesetzt.

Ein weiterer Nachteil der Wärmebildbeobachtung besteht darin, dass unterschiedliche Verbraucher zu unterschiedlichen Zeiten ihre maximale Energie über die beobachteten Leitungen und Verbindungen ziehen. Damit ist ein noch größerer Aufwand verbunden, denn für jede Verbindung müsste der maximale Stromwert und der Zeitpunkt, zu dem dieser Strom fließt ermittelt werden. Die Messungen wären dann zu diesen Zeiten durchzuführen. Dies ist in der Praxis nicht durchführbar. Damit ist die Einsatzmöglichkeit dieses Verfahrens weiter eingeschränkt.

Ein weiterer Nachteil ergibt sich aus der Tatsache, dass außerordentliche Zustände, wie insbesondere Kurzschlüsse, kurzzeitige Überlast, unregelmäßige Oberwellenbelastung, usw., mit dieser Methode nicht erfassbar sind, obwohl diese Phänomene zusätzlich zu dem Betriebstrom die Leitungen und deren Verbindungen weiter belasten. Als Resultat werden die Alterungsprozesse in diesen Leitungen und Verbindungen für den Betreiber der Anlage unbemerkt beschleunigt.

Vor diesem Hintergrund ist es Aufgabe der Erfindung, die Sicherheit von elektrischen Anlagen zu verbessern, die Nachteile heute angewandter Überwachungsvorrichtungen zu beseitigen und eine preiswerte Vorrichtung sowie ein Verfahren zur Verfolgung des Temperaturanstiegs vorzuschlagen, die in einfacher und wirksamer Weise garantiert, dass die Temperatur an den zu überwachenden Leitern und Verbindungen zu keinem Zeitpunkt einen vorgegebenen kritischen Wert erreicht.

Der gegenständliche Teil der Aufgabe wird durch eine elektronische Vorrichtung mit den Merkmalen von Patentanspruch 1 und durch eine elektrische Anlage mit den Merkmalen von Patentanspruch 9 gelöst. Der verfahrensmäßige Teil der Aufgabe wird durch ein Verfahren zum Betrieb einer elektronischen Vorrichtung gemäß Patentanspruch 15 gelöst. Die Unteransprüche zeigen vorteilhafte Ausführungsformen und Weiterbildungen des Erfindungsgegenstandes auf.

Erfindungsgemäß weist die Vorrichtung mindestens einen RFID- Transponder, der an dem mindestens einen Stromleiter oder an der mindestens einen Stromverbindung angeordnet ist, mindestens einen in dem RFID- Transponder integrierbaren, mit dem RFID Transponder kombinierbaren oder mit dem RFID- Transponder koppelbaren Temperatursensor und mindestens eine RFID- Antenne auf, wobei der RFID- Transponder mittels der RFID- Antenne mit einem externen RFID- Reader zum Empfangen oder Auslesen der Daten aus dem RFID- Transponder und zum Bereitstellen eines an den gemessenen Temperaturwert gekoppelten Signals kabellos verbindbar ist.

Im Sinne der Anmeldung wird unter dem Akronym RFID, basierend auf dem englischen Begriff "Radiofrequency identification", die Identifizierung mit Hilfe von elektromagnetischen Wellen verstanden. Dabei ermöglicht RFID die automatische Identifizierung und Lokalisierung unter anderem von Gegenständen und erleichtert damit erheblich die Erfassung und Speicherung von Daten. Prinzipiell besteht dabei ein RFID-System besteht aus einem Transponder, der sich am oder im Gegenstand befindet und diese kennzeichnet, sowie einem Lesegerät, dem RFID- Reader, zum Auslesen der Transponder- Kennung. Der RFID- Reader enthält eine Software, vorzugsweise ein Mikroprogramm, das den eigentlichen Leseprozess steuert, und eine RFID- Middleware mit Schnittstellen zu weiteren EDV-Systemen und Datenbanken. Dabei erzeugt der RFID- Reader ein elektromagnetisches Hochfrequenzfeld geringer Reichweite, vorzugsweise durch den Einsatz von Induktionsspulen.

Erfindungsgemäß ist der mindestens eine Temperatursensor derart angeordnet, dass die Temperatur der elektrischen Leitung oder Verbindung unmittelbar den Temperatursensor erregt. Der Temperatursensor ist in seiner Bauform sehr klein und elektrisch isoliert gekapselt ausgebildet und ist derart konzipiert, dass an der elektrischen Leitung oder Verbindung auftretenden Temperaturwerte direkt erfasst werden. Proportional zu den gemessenen Temperaturen werden digitale Werte zum Speichern, zum Auslesen und zum Versenden erstellt. Die so entstehenden Daten können direkt von dem mindestens einen RFID- Transponder an die RFID- Antenne übersendet, oder von dem an die RFID- Antenne gekoppelten RFID- Reader regelmäßig oder kontinuierlich ausgelesen werden. Damit die Temperaturwerte, welche bei Überlastung der elektrischen Anlage auftreten nicht die Überwachung der Anlage für den Betriebszustand verfälschen, werden die Temperaturwerte mit festgelegter Zeitverzögerung erfasst.

Nach einer erfindungsgemäßen Weiterbildung der elektronischen Vorrichtung ist in den RFID-Transponder mindestens eine Speichereinrichtung, insbesondere ein monopolare, irreversibler Maximumwert- Speicher, integriert. Alternativ kann die Speichereinrichtung auch extern von dem RFID- Transponder angeordnet und mit diesem kombiniert oder über geeignete Verbindungsmittel mit diesen gekoppelt sein. Mittels der Speichereinrichtung ist eine autarke und irreversible Speicherung eines über den mindestens einen Temperatursensor gemessenen Temperaturhöchstwerts möglich. Bei einem Systemausfall oder bei Ausfall der Energieversorgung der elektronischen Vorrichtung oder einer sonstigen Störung des Systems sind somit die gemessenen Temperaturwerte in vorteilhafter Weise gespeichert und stehen bei Wideranfahren der elektronischen Vorrichtung unmittelbar zur weiteren Verwendung zur Verfügung.

Erfindungsgemäß wird vorgeschlagen, den RFID- Transponder als passiven RFID- Transponder auszubilden. Alternative kann der mindestens eine RFID- Transponder auch als semi- aktiver RFID-Transponder mit einer integrierten Batterie für die Energieversorgung der Temperaturfühler ausgebildet sein. In einer besonders vorteilhaften Ausführungsform des Erfindungsgegenstandes ist der RFID- Transponder als aktiver RFID- Transponder ausgebildet ist und weist Batterie für die Energieversorgung des gesamten RFID- Transponders auf. Die Batterie ist dabei vorzugsweise als wiederaufladbares Energiespeichermedium ausgebildet. Der Einsatz von aktiven RFID- Transpondern wird erfindungsgemäß insbesondere dann vorgeschlagen, wenn größere Reichweiten erzielt werden sollen und die Kosten der RFID- Transponder nicht kritisch sind.

In einer bevorzugten Ausgestaltungsform weist die erfindungsgemäße elektronische Vorrichtung eine Mehrzahl von RFID- Transpondern aufweist, die gleichzeitig detektierbar und ansprechbar sind.

Erfindungsgemäß werden die über den Temperatursensor gemessenen Temperaturwerte kontinuierlich ausgelesen und an den RFID- Reader übermittelt oder in dem Speichermedium gespeichert. Damit wird eine kontinuierliche Verfolgung der Veränderung der Temperaturwerte über die Zeit möglich.

Die ausgelesenen und an den RFID- Reader übermittelten Temperaturwerte werden mittels einer Software zur kontinuierlichen Auswertung und Überwachung der elektronischen Vorrichtung analysiert. Bei Überschreitung eines vordefinierten Temperaturwertes wird ein Warnsignal generiert, so dass geeignete Maßnahmen durch das Bedienpersonal eingeleitet werden können. Alternativ wird erfindungsgemäß vorgeschlagen bei Überschreitung eines vordefinierten Temperaturwertes ein Signal zur automatischen Abschaltung der elektrischen Anlage zu generieren um eine Beschädigung oder Zerstörung der elektrischen Anlage zu verhindern. Die Auswertung der Daten erfolgt dabei vorzugsweise mit Hilfe der Software auf der Grundlage der "SPC- Methode". Dass heißt, alle Daten werden auf ihren Maximalwert und auf Ihre Tendenz der Erwärmung über der Zeit dargestellt. Nach Festlegung der oberen Grenzlagen und Intervalle werden die elektrischen Leitungen und/ oder Verbindungen auf Ihre Erwärmung hin klassifiziert. Ein entstehendes Wärmeproblem kann somit sicher und rechtzeitig erkannt werden. Dem Betreiber der Anlage bleibt genug Zeit um eine Revision bzw. Instandsetzung der betroffenen elektrischen Verbindung zu planen und durchzuführen.

Erfindungsgemäß ist die elektronische Vorrichtung in einer elektrischen Anlage angeordnet.

Dabei können die die RFID- Transponderdaten mittels einer handgeführten Antenne bei Stillstand oder während des Betriebes der elektrischen Anlage ausgelesen werden. Zum Einbringen der handgeführten Antenne in der elektrischen Anlage sind erfindungsgemäß Isolierstoffrohre oder Kanäle vorgehen sind, die ein Heranführen der handgeführten Antenne direkt an den auszulesenden RFID- Transponder ohne Komplikationen ermöglichen. Dadurch kann die handgeführte Antenne bzw. das handgeführte Auslesegerät durch die Rohre bzw. Kanäle bewegt werde, wodurch wirksam die Gefahr eines elektrischen Schlags oder die Zündung von Störlichtbogen oder die Verursachung eines Kurzschlusses unterbunden wird. Bei diesem Verfahren braucht der Anwender nur eine einzige RFID-Antenne samt RFID- Reader zum Auslesen der Daten aus sämtlichen Temperatursensoren der elektrischen Anlage.

Denkbar ist auch die RFID- Transponderdaten über fest in der elektrischen Anlage installierte RFID-Antennen oder über außerhalb der elektrischen Anlage installierte Antennen während des Betriebes der Anlage auszulesen. Die RFID- Antennen können innerhalb der Anlage in sicheren Bereichen, aber auch außerhalb der Anlage platziert und montiert werden. Die Antennen sind so angeordnet, dass alle RFID- Transponder in der Anlage ausgelesen werden können. In der Praxis zeigt sich, dass auch bei geschlossenen, mit Metall gekapselten Anlagen mit wenigen Antennen alle benötigten RFID-Transponder detektiert werden.

Erfindungsgemäß ist dabei die Mehrzahl der in oder außerhalb der elektrischen Anlage angeordneter Antennen mittels Multiplexer vernetzbar. Dabei wird unter einem Multiplexer im Sinne der Anmeldung ein Selektionsschaltnetz in der analogen Elektronik- und Digitaltechnik verstanden, mit dem aus einer Anzahl von Eingangssignalen eines ausgewählt werden kann, etwa bei einem Speicherzugriff oder der Anwahl oder Durchschaltung analoger und digitaler Signalkanäle, wobei der Multiplexer neben der Mehrzahl an Eingängen und einem Ausgang über ein oder mehrere Steuersignale verfügt, über die festgelegt wird, welcher Eingang ausgewählt wird. Mithilfe eines Multiplexers kann somit eine Vielzahl von Antennen parallel verschaltet werden, was die Anwendung der Erfindung in komplexen und weit ausgedehnten elektrischen Anlagen ermöglicht. Das Auslesen erfolgt mit minimalem Aufwand, ohne Gefahren für das Bedienerpersonal und ohne Gefahren für die Anlage und für das System, selbst im laufenden Betrieb der elektrischen Anlage.

Das erfindungsgemäße Verfahren zum Betrieb der elektronischen Vorrichtung weist dabei die folgenden Verfahrensschritte auf:
a) kontinuierliche Erfassung der Temperaturwerte mindestens einer elektrischen Leitung und/oder einer elektrischen Verbindung durch den mindestens einen Temperatursensor;
b) Abfrage der Temperaturwerte oder Übermittlung der Temperaturwerte und/ oder Speicherung der Temperaturwerte mittels des RFID- Transponders an den RFID- Reader;
c) Auswertung und Überwachung der Temperaturwerte durch Vergleich mit vordefinierten Grenztemperaturwerten;
d) Auslösen eines Warnsignals bei überschreiten eines vordefinierten Grenztemperaturwerten oder automatisches Abschalten der elektrischen Anlage oder Teilen derselben.

Im Stand der Technik wurden elektrische Anlagen und Einrichtungen mit viel Reserve- Innenraum aufgrund der Sicherheitsaspekte hinsichtlich der Erwärmung der Bauteile hergestellt. Diese Unsicherheit wegen Übererwärmung verbraucht viel Platz und Material, sowohl bei den elektrischen Anlagen selbst als auch in den Betriebsräumen und Betriebsstätten, in welchen derartige elektrische Anlagen angeordnet sind. Beim Einsatz der vorliegenden Erfindung kann in vorteilhafter Weise die Konstruktion von elektrischen Anlagen und Einrichtungen rationalisiert und der Aufbau und die innere Unterteilung auf die tatsächlichen Betriebsbedingungen minimiert werden.

Die erfindungsgemäße Vorrichtung realisiert in allen Spannungsebenen, in allen gängigen Anlagentypen, von offenen bis gekapselten elektrischen Anlagen und Einrichtungen, die Überwachung der Leitungen, insbesondere der Hauptstrombahnen und deren Verbindungen, auf definierte Übererwärmung mit sehr geringen Kosten und minimalem Aufwand,. Das Erfassen der Temperaturdaten ist jederzeit ohne Abschaltung der Anlage und ohne Gefahren für das Bedienerpersonal oder für die elektrische Anlage selbst mit eindeutigen Aussagen über die Position der Gefahrenquelle möglich. Die Daten, die zu den an der Messstelle aufgetretenen höchsten Temperaturen proportional sind, sind, auch bei Störung des Systems selbst, aufgrund Speicherung verfügbar, um zur späteren Zeitpunkt abgefragt werden zu können. Aufgrund der modularen Gestaltung kann die elektronische Vorrichtung erfindungsgemäß stufenweise von der einfachsten Variante bis zur High- End- Variante ausgebaut werden. Insbesondere ist eine Anpassung an die Größe und räumliche Ausdehnung der elektrischen Anlage jederzeit möglich.

## Patentansprüche

1. Elektronische Vorrichtung zum Erfassen von Temperaturwerten an mindestens einem elektrischen Stromleiter oder an mindestens einer Stromverbindung in einer elektrischen Anlage, **dadurch gekennzeichnet, dass** die Vorrichtung mindestens einen RFID-Transponder, der an dem mindestens einen Stromleiter oder an der mindestens einen Stromverbindung angeordnet ist, mindestens einen in dem RFID- Transponder integrierbaren, mit dem RFID Transponder kombinierbaren oder mit dem RFID-Transponder koppelbaren Temperatursensor und mindestens eine RFID- Antenne aufweist, wobei der RFID- Transponder mittels der RFID- Antenne mit einem RFID-Reader zum Empfangen oder Auslesen der Daten aus dem RFID- Transponder und zum Bereitstellen eines an den gemessenen Temperaturwert gekoppelten Signals kabellos verbindbar ist.

2. Elektronische Vorrichtung nach Anspruch 1, **dadurch gekennzeichnet, das** in den RFID-Transponder mindestens eine Speichereinrichtung, insbesondere ein monopolare, irreversibler Maximumwert- Speicher, für die autarke Speicherung eines an dieser Stelle aufgetretenen Temperaturhöchstwerts integriert oder mit diesen kombiniert oder mit diesen gekoppelt ist.

3. Elektronische Vorrichtung nach Anspruch 1, **dadurch gekennzeichnet, dass** der RFID-Transponder als passiver RFID- Transponder ausgebildet ist.

4. Elektronische Vorrichtung nach Anspruch 1, **dadurch gekennzeichnet, dass** der RFID-Transponder als semi- aktiver RFID- Transponder ausgebildet ist und eine integrierte Batterie für die Energieversorgung der Temperaturfühler aufweist.

5. Elektronische Vorrichtung nach Anspruch 1, **dadurch gekennzeichnet, dass** der RFID-Transponder als aktiver RFID- Transponder ausgebildet ist und eine integrierte Batterie für die Energieversorgung des RFID- Transponders aufweist.

6. Elektronische Vorrichtung nach Anspruch 1, **dadurch gekennzeichnet, dass** die elektronische Vorrichtung eine Mehrzahl von RFID- Transpondern aufweist, die gleichzeitig detektierbar und ansprechbar sind.

7. Elektronische Vorrichtung nach einem der vorhergehenden Ansprüche 1 bis 6, **dadurch gekennzeichnet, dass** die über den Temperatursensors gemessenen Temperaturwerte kontinuierlich ausgelesen und an den RFID- Reader übermittelt oder in der Speichereinrichtung gespeichert werden.

8. Elektronische Vorrichtung nach Anspruch 7, **dadurch gekennzeichnet, dass** die ausgelesenen und an den RFID- Reader übermittelten Temperaturwerte mittels einer Software zur kontinuierlichen Überwachung der elektronischen Vorrichtung analysiert werden und bei Überschreitung eines vordefinierten Grenztemperaturwertes ein Warnsignal generiert wird oder ein Signal zur automatischen Abschaltung der elektrischen Anlage generiert wird.

9. Elektrische Anlage, **gekennzeichnet durch** eine elektronische Vorrichtung nach einem der vorhergehenden Ansprüche 1 bis 8 aufweist.

10. Elektrische Anlage nach Anspruch 9, **dadurch gekennzeichnet, dass** die RFID-Transponderdaten mittels einer handgeführten Antenne bei Stillstand oder während des Betriebes der elektrischen Anlage auslesbar sind.

11. Elektrische Anlage nach Anspruch 9, **dadurch gekennzeichnet, dass** zum Einbringen der handgeführten Antenne in der elektrischen Anlage Isolierstoffrohre oder Kanäle vorgehen sind.

12. Elektrische Anlage nach Anspruch 9, **dadurch gekennzeichnet, dass** die RFID-Transponderdaten über fest in der elektrischen Anlage installierten Antennen während des Betriebes der Anlage auslesbar sind.

13. Elektrische Anlage nach Anspruch 9, **dadurch gekennzeichnet, dass** die RFID-Transponderdaten über außerhalb der elektrischen Anlage installierten Antennen während des Betriebes der Anlage auslesbar sind.

14. Elektrische Anlage nach Anspruch 13, **dadurch gekennzeichnet, dass** eine Mehrzahl in der elektrischen Anlage angeordneter Antennen mittels Multiplexer vernetzbar sind.

15. Verfahren zum Betrieb einer elektronischen Vorrichtung nach einem der Ansprüche 1 bis 8, die folgenden Verfahrensschritte aufweisend:
a) kontinuierliche Erfassung der Temperaturwerte mindestens einer elektrischen Leitung und/ oder einer elektrischen Verbindung durch den mindestens einen Temperatursensor;
b) Abfrage der Temperaturwerte oder Übermittlung der Temperaturwerte und/ oder Speicherung der Temperaturwerte mittels des RFID- Transponders an den RFID-Reader;
c) Auswertung und Überwachung der Temperaturwerte durch Vergleich mit vordefinierten Grenztemperaturwerten;
d) Auslösen eines Warnsignals bei überschreiten eines vordefinierten Grenztemperaturwerten oder automatisches Abschalten der elektrischen Anlage oder Teilen derselben.
